# EUROPÄISCHE PATENTSCHRIFT

(11) **EP 1 624 011 B1**
(45) Veröffentlichungstag und Bekanntmachung des Hinweises auf die Patenterteilung: **04.10.2006**
(21) Anmeldenummer: 05013573.0
(22) Anmeldetag: 23.06.2005
(51) Int. Cl.: C08G 77/60

(54) **Vernetzte und verzweigte Organopolysilane**
Crosslinked and branched organopolysilanes
Organopolysilanes réticulés et ramifiés

(30) Priorität: 05.08.2004 DE 102004038145
(43) Veröffentlichungstag der Anmeldung: 08.02.2006
(73) Patentinhaber: Wacker Chemie AG, 81737 München (DE)
(72) Erfinder: Knies, Wolfgang, Dr., 84489 Burghausen (DE); Boegershausen, Karin, 84489 Burghausen (DE); Weinhart, Annemarie, 84533 Haiming (DE)
(74) Vertreter: Fritz, Helmut

(56) Entgegenhaltungen:
- US-A- 5 905 139
- US-A1- 2002 177 660
- US-A1- 2004 005 109
- PATENT ABSTRACTS OF JAPAN Bd. 1995, Nr. 08, 29. September 1995 (1995-09-29) -& JP 07 113010 A (SUMITOMO ELECTRIC IND LTD), 2. Mai 1995 (1995-05-02)
- PATENT ABSTRACTS OF JAPAN Bd. 1998, Nr. 14, 31. Dezember 1998 (1998-12-31) & JP 10 237177 A (NIPPON UNICAR CO LTD), 8. September 1998 (1998-09-08)

## Beschreibung

Die Erfindung betrifft vernetzte und verzweigte Organopolysilane (P) und ein Verfahren zu deren Herstellung.

Die Herstellung von Polysilanen ist beispielsweise in EP 949289 A und US 4,921,321 A beschrieben.

In US 2002/177660 A1 ist die Herstellung von verzweigten Polysilanen in Gegenwart von Alkalimetall durch Umsetzung eines Gemisches aus Organotrihalosilan, Organotetrahalosilan und Diorganodihalosilan beschrieben.

Nach bekannten Verfahren hergestellte Organopolysilane, die sowohl lineare Anteile als auch Verzweigungen und Vernetzungen aufweisen, lassen sich sehr schlecht filtrieren. Dies treibt die Kosten für deren Herstellung extrem in die Höhe.

Der Erfindung liegt die Aufgabe zugrunde, die Filtrierbarkeit von verzweigten und vernetzten Organopolysilanen zu verbessern.

Gegenstand der Erfindung ist ein Verfahren zur Herstellung von vernetzten oder verzweigten Organopolysilanen (P), die mindestens eine Einheit, die ausgewählt wird,aus Einheiten der allgemeinen Formeln 1 und 2

RSi (1),

=Si= (2),

und mindestens eine Einheit der allgemeinen Formel 3

R₂Si= (3),

und gegebenenfalls Einheiten der allgemeinen Formel 4

R₃Si- (4),

enthalten,
bei dem Silan, das ausgewählt wird aus Silanen der allgemeinen Formeln 1a und 2a

RSiX₃ (1a),

SiX₄ (2a) ,

und Silan der allgemeinen Formel 3a

R₂SiX₂ (3a),

und gegebenenfalls Silan der allgemeinen Formel 4a

R₃SiX (4a),

wobei
- **R**: Wasserstoff oder einen Kohlenwasserstoffrest mit 1 bis 18 Kohlenstoffatomen und
- **X**: Fluor, Chlor oder Brom bedeuten,
mit elementarem Metall, das ausgewählt wird aus Alkali- und Erdalkalimetall, umgesetzt wird,
wobei die Zugabe der Reaktionspartner so eingestellt wird, dass das Silan der allgemeinen Formel 3a bei der Umsetzung mit elementarem Metall höchstens 1 Mol-% Silan, das ausgewählt wird aus Silanen der allgemeinen Formeln 1a und 2a, enthält und wobei pro 100 Molteile Silan der allgemeinen Formel 3a mindestens 2 Molteile, die ausgewählt werden aus Silanender allgemeinen Formeln 1a und 2a, eingesetzt werden.

Die Umsetzung des Silans der allgemeinen Formel 3a mit dem elementaren Metall erfolgt getrennt von der Umsetzung der Silane der allgemeinen Formeln 1a und/oder 2a mit dem elementaren Metall. Die dabei entstehenden vernetzten oder verzweigten Organopolysilane (P) lassen sich gut filtrieren.

Vorzugsweise enthält das Silan der allgemeinen Formel 3a bei der Umsetzung mit elementarem Metall höchstens 1 Mol-%, besonders bevorzugt höchstens 0,1 Mol-%, insbesondere höchstens 0,01 Mol-% Silan, das ausgewählt wird aus Silanen der allgemeinen Formeln 1a und 2a.

Die Silane der allgemeinen Formeln 1a, 2a und 4a können gemischt eingesetzt werden, ebenso wie Silane der allgemeinen Formeln 3a und 4a.

Vorzugsweise wird zuerst zumindest ein Teil des Silans der allgemeinen Formel 3a mit elementarem Metall umgesetzt.

Bei dem Verfahren werden pro 100 Molteile Silan der allgemeinen Formel 3a mindestens 2 Molteile, bevorzugt mindestens 5 Molteile, die ausgewählt werden aus Silanen der allgemeinen Formeln 1a und 2a eingesetzt. Pro 100 Molteile Silan der allgemeinen Formel 3a werden vorzugsweise höchstens 60 Molteile, besonders bevorzugt höchstens 30 Molteile, die ausgewählt werden aus Silanen der allgemeinen Formeln 1a und 2a eingesetzt.

Vorzugsweise bedeutet **R** einen von ethylenisch oder acetylenisch ungesättigten Bindungen freien Kohlenwasserstoffrest mit 1 bis 18 Kohlenstoffatomen.

Beispiele für Kohlenwasserstoffreste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha-und der β-Phenylethylrest; Bevorzugt handelt es sich bei dem Rest **R** um einen Phenylrest oder linearen Alkylrest, insbesondere mit 1 bis 10, besonders 1 bis 6 Kohlenstoffatomen. Besonders bevorzugte Kohlenwasserstoffreste **R** sind n-Propyl-, Ethyl- und insbesondere Methylrest.

**X** bedeutet vorzugsweise Chlor.

Als elementare Metalle werden vorzugsweise Li, Na, K und Mg eingesetzt. Wenn Magnesium eingesetzt wird ist die Anwesenheit von Übergangsmetallhalogeniden bei der Umsetzung bevorzugt, insbesondere von ZnCl₂ und FeCl₃.

Die Umsetzung erfolgt vorzugsweise bei mindestens 20°C und höchstens 200°C, insbesondere höchstens 160°C.

Die Umsetzung wird vorzugsweise unter Schutzgas, insbesondere Ar oder N₂ durchgeführt.

Der Druck bei der Umsetzung liegt vorzugsweise bei 1 bar, kann aber auch erheblich höher oder niedriger sein.

Die Umsetzung wird vorzugsweise in einem aprotischen Lösungsmittel durchgeführt. Beispiele für solche Lösungsmittel sind Ether, wie Dioxan, Tetrahydrofuran, Diethylether, Diisopropylether, Diethylenglycoldimethylether; Kohlenwasserstoffe, wie Pentan, n-Hexan, Hexan-Isomerengemische, Heptan, Oktan, Dodecan, Waschbenzin, Petrolether, Benzol, Toluol, Xylole, Tetrahydronaphthalin; oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Die Reaktionsmischung wird vorzugsweise nach dem Abkühlen filtriert.

Vorzugsweise wird die Lösung der Organopolysilane (P) mit Alkohol gefällt. Als Alkohol sind Methanol, Ethanol, Isopropanol, Propanol und Butanole bevorzugt.

Gegenstand der Erfindung sind auch die nach dem erfindungsgemässen Verfahren erhältlichen vernetzten und verzweigten Organopolysilane (P). Vorzugsweise enthalten die Organopolysilane (P) mindestens 10, insbesondere mindestens 50 Einheiten der allgemeinen Formel 3. Vorzugsweise enthalten die Organopolysilane (P) mindestens 3, insbesondere mindestens 10 Einheiten, die ausgewählt werden aus Einheiten der allgemeinen Formeln 1 und 2.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1 (erfindungsgemäss)

Ein Fünfhalskolben, der mit einem Rührer, einem Tropftrichter, einem Temperaturfühler, einem Rückflusskühler und einer Gaszufuhr versehen war, wurde mit Stickstoff gespült. In diesen wurden ca. 470 ml Xylol vorgelegt. In dieses wurden 23 g in kleine Stücke geschnittenes Natrium gegeben. Die Mischung wurde auf 130°C aufgeheizt. Anschliessend wurde der Rührer mit sich langsam steigernder Rührgeschwindigkeit gestartet. Die endgültige Rührgeschwindigkeit betrug 330 rpm. Nach ca. 30 Minuten wurden 70 g Phenylmethyldichlorsilan zugetropft. Nach der Zugabe wurde 5 Minuten gewartet und anschliessend 6,4 g Methyltrichlorsilan zugetropft. Die Tropfgeschwindigkeiten wurden so gewählt, dass das Xylol am Sieden gehalten wurde. In der Regel dauerte das Zutropfen ca. 20 bis 30 Minuten. Nach beendeter Zugabe wurde die Temperatur der Heizung auf 135°C gesteigert und noch eine Stunde nachreagiert. Anschliessend wurde die Heizung entfernt und das Reaktionsgemisch langsam abgekühlt. Die auf Raumtemperatur abgekühlte Mischung wurde über ein Druckfilter (2 bar Stickstoff) mit einem Filterpapier (Porengrösse 5 µm) abfiltriert.
Die Filtration war innerhalb von 10 Minuten beendet.

Die erhaltene Lösung wurde eingeengt und durch Eingiessen der Lösung in Isopropanol wurde das Polysilan ausgefällt. Das Polysilan wurde abfiltriert und getrocknet.

### Beispiel 2 (nicht erfindungsgemäss)

Beispiel 1 wurde durchgeführt mit dem einen Unterschied, dass Phenylmethyldichlorsilan und Methyltrichlorsilan vor der Zugabe gemischt wurden und das Gemisch zugetropft wurde.
Die Filtration dauerte 180 Minuten.

### Beispiel 3 (erfindungsgemäss)

Beipiel 1 wurde wiederholt mit dem Unterschied, dass ein Gemisch von 70 g Phenylmethyldichlorsilan und 2,8 g Dimethyldichlorsilan zuerst zugetropft wurde. Anschliessend wurden 6,4 g Methyltrichlorsilan zugetropft.
Die Filtration dauerte 15 Minuten.

### Beispiel 4 (erfindungsgemäss)

Beispiel 1 wurde wiederholt mit dem Unterschied, dass ca. 20 Minuten nach dem Methyltrichlorsilan noch 1 g Trimethylchlorsilan zugetropft wurden.
Die Filtration war in 5 Minuten beendet.

### Beispiel 5 (nicht erfindungsgemäss)

Beispiel 4 wurde wiederholt mit dem Unterschied, dass Phenylmethyldichlorsilan, Methyltrichlorsilan und Dimethyldichlorsilan vermischt wurden und das Gemisch zugetropft wurde.
Die Filtration dauerte ca. 100 Minuten.

### Beispiel 6 (nicht erfindungsgemäss)

Beispiel 4 wurde wiederholt mit dem Unterschied, dass Phenylmethyldichlorsilan und Dimethyldichlorsilan vorgemischt und geteilt wurden. Die eine Hälfte wurde sofort zudosiert, die andere Hälfte mit dem Methyltrichlorsilan vermischt und anschliessend zudosiert. Am Ende wurde das Trimethylchlorsilan zugegeben.
Die Filtration dauerte 45 Minuten.

### Beispiel 7 (erfindungsgemäss)

Beipiel 6 wurde wiederholt mit dem Unterschied, dass das Methyltrichlorsilan nicht der zweiten Hälfte zugemischt wurde, sondern einzeln nach der ersten Hälfte des Gemisches Phenylmethyldichlorsilan und Dimethyldichlorsilan zudosiert wurde. Im Anschluss wurde die zweite Hälfte des Silangemisches und dann das Trimethylchlorsilan zugegeben.
Die Filtration dauerte 5 Minuten.

## Patentansprüche

1. Verfahren zur Herstellung von vernetzten oder verzweigten Organopolysilanen (P), die mindestens eine Einheit, die ausgewählt wird aus Einheiten der allgemeinen Formeln 1 und 2
RSi= (1),
=Si= (2),
und mindestens eine Einheit der allgemeinen Formel 3
R₂Si= (3),
und gegebenenfalls Einheiten der allgemeinen Formel 4
R₃Si- (4),
enthalten,
bei dem Silan, das ausgewählt wird aus Silanen der allgemeinen Formeln 1a und 2a
RSiX₃ (1a),
SiX₄ (2a),
und Silan der allgemeinen Formel 3a
R₂SiX₂ (3a),
und gegebenenfalls Silan der allgemeinen Formel 4a
R₃SiX (4a),
wobei
**R** Wasserstoff oder einen Kohlenwasserstoffrest mit 1 bis 18 Kohlenstoffatomen und
**X** Fluor, Chlor oder Brom bedeuten, mit elementarem Metall, das ausgewählt wird aus Alkali- und Erdalkalimetall, umgesetzt wird,
wobei die Zugabe der Reaktionspartner so eingestellt wird, dass das Silan der allgemeinen Formel 3a bei der Umsetzung mit elementarem Metall höchstens 1 Mol-% Silan, das ausgewählt wird aus Silanen der allgemeinen Formeln 1a und 2a, enthält,
und wobei pro 100 Molteile Silan der allgemeinen Formel 3a mindestens 2 Molteile, die ausgewählt werden aus Silanen der allgemeinen Formeln 1a und 2a, eingesetzt werden.

2. Verfahren nach Anspruch 1, bei dem pro 100 Molteile Silan der allgemeinen Formel 3a höchstens 60 Molteile, die ausgewählt werden aus Silanen der allgemeinen Formeln 1a und 2a, eingesetzt werden.

3. Verfahren nach Anspruch 1 und 2, bei dem **R** ein Phenylrest oder linearer Alkylrest mit 1 bis 10 Kohlenstoffatomen ist.

4. Verfahren nach Anspruch 1 bis 3, bei dem das elementare Metall ausgewählt wird aus Li, Na, K und Mg.

5. Verfahren nach Anspruch 1 bis 4, bei dem die Umsetzung in einem aprotischen Lösungsmittel durchgeführt wird.

6. Vernetzte oder verzweigte Organopolysilane (P), erhältlich nach dem Verfahren gemäss Anspruch 1 bis 5.

## Claims

1. Process for preparing crosslinked or branched organopolysilanes (P) which contain at least one unit which is selected from units of the general formulae 1 and 2
Rsi (1),
=Si= (2),
and at least one unit of the general formula 3
R₂Si= (3)
and optionally units of the general formula 4
R₃Si- (4)
in which silane which is selected from silanes of the general formulae 1a and 2a
RSiX₃ (1a),
SiX₄ (2a),
and silane of the general formula 3a
R₂SiX₂ (3a)
and optionally silane of the general formula 4a
R₃SiX (4a)
where
**R** is hydrogen or a hydrocarbyl radical having from 1 to 18 carbon atoms and
**X** is fluorine, chlorine or bromine, is reacted with elemental metal which is selected from alkali metal and alkaline earth metal, the addition of the reaction partners being adjusted such that the silane of the general formula 3a in the reaction with elemental metal contains at most 1 mol% of silane which is selected from silanes of the general formulae 1a and 2a,
and at least 2 molar parts which are selected from silanes of the general formulae 1a and 2a being used per 100 molar parts of silane of the general formula 3a.

2. The process as claimed in claim 1, in which at most 60 molar parts which are selected from silanes of the general formulae 1a and 2a are used per 100 molar parts of silane of the general formula 3a.

3. The process as claimed in claim 1 and 2, in which **R** is a phenyl radical or linear alkyl radical having from 1 to 10 carbon atoms.

4. The process as claimed in claim 1 to 3, in which the elemental metal is selected from Li, Na, K and Mg.

5. The process as claimed in claim 1 to 4, in which the reaction is carried out in an aprotic solvent.

6. Branched or crosslinked organopolysilanes (P) obtainable by the process according to claim 1 to 5.

## Revendications

1. Procédé de préparation d'organopolysilanes (P) réticulés ou ramifiés contenant au moins une unité choisie parmi des unités des formules générales 1 et 2
RSi≡ (1),
=Si= (2)
et au moins une unité de la formule générale 3
R₂Si= (3)
et le cas échéant des unités de la formule générale 4
R₃Si- (4)
où l'on fait réagir du silane, qui est choisi parmi des silanes des formules générales 1a et 2a
RSiX₃ (1a)
SiX₄ (2a)
et du silane de la formule générale 3a
R₂SiX₂ (3a)
et le cas échéant du silane de la formule générale 4a
R₃SiX (4a)
dans lesquelles
R représente de l'hydrogène ou un radical hydrocarboné comportant de 1 à 18 atomes de carbone et
X représente du fluor, du chlore ou du brome,
avec un métal élémentaire choisi parmi des métaux alcalins et alcalino-terreux,
l'addition des partenaires de réaction étant ajustée de manière à ce que le silane de la formule générale 3a, lors de la réaction avec le métal élémentaire, contienne un maximum de 1% molaire de silane choisi parmi des silanes des formules générales la et 2a, et où, pour 100 parties molaires de silane de la formule générale 3a, on met en oeuvre au moins 2 parties molaires choisies parmi des silanes des formules générales 1a et 2a.

2. Procédé suivant la revendication 1, dans lequel on met en oeuvre, pour 100 parties molaires de silane de la formule générale 3a, un maximum de 60 parties molaires choisies parmi des silanes des formules générales la et 2a.

3. Procédé suivant les revendications 1 et 2, dans lequel R représente un radical phényle ou un radical alkyle linéaire comportant de 1 à 10 atomes de carbone.

4. Procédé suivant les revendications 1 à 3, dans lequel le métal élémentaire est choisi parmi Li, Na, K et Mg.

5. Procédé suivant les revendications 1 à 4, dans lequel la réaction est entreprise dans un solvant aprotique.

6. Organopolysilanes (P) réticulés ou ramifiés, que l'on peut obtenir par le procédé suivant les revendications 1 à 5.
